Europäisches Patentamt

European Patent Office

Office européen des brevets

(19)

(11) Veröffentlichungsnummer : **0 035 579**
**B1**

(12) # EUROPÄISCHE PATENTSCHRIFT

(45) Veröffentlichungstag der Patentschrift :
05.06.85

(51) Int. Cl.⁴ : **G 01 G 21/30**

(21) Anmeldenummer : **80101189.1**

(22) Anmeldetag : **10.03.80**

(54) **Staub- und spritzwasserdichte Waage.**

(43) Veröffentlichungstag der Anmeldung :
**16.09.81 Patentblatt 81/37**

(45) Bekanntmachung des Hinweises auf die Patenterteilung : **05.06.85 Patentblatt 85/23**

(84) Benannte Vertragsstaaten :
**AT BE CH DE FR GB IT NL SE**

(56) Entgegenhaltungen :
**DE-A- 2 615 289**
**NL-C-   56 322**
**US-A- 3 444 943**
**US-A- 3 963 082**
**GB-A-8374/1911**

(73) Patentinhaber : **Wirth Gallo Patent AG**
**Sonnenbergstrasse 55**
**CH-8032 Zürich (CH)**

(72) Erfinder : **Wirth, Johannes**
**Sonnenbergstrasse 55**
**CH-8032 Zürich (CH)**

EP 0 035 579 B1

**Beschreibung**

Die vorliegende Erfindung bezieht sich auf eine staub- und spirtzwasserdichte Waage mit einem Mess-System, einem Gestell mit mindestens einem Fuss, einem Lastträger und Mitteln zur parallelen und senkrechten Führung des Lastträgers.

Waagen werden oft in solchen Anwendungen eingesetzt, in welchen sie den Auswirkungen von Staub und/oder Spritzwasser ausgesetzt sind, oder aber in einer Umgebung, die für die Gesundheit des Bedienungspersonals schädlich sein könnte. Verschiedene Massnahmen sind bereits vorgeschlagen worden, um solche Waagen derart zu schützen, dass Gase, Staub und Feuchtigkeit innerhalb der Waage nicht eindringen können. So ist z. B. im GB-A-8374/1911 vorgeschlagen worden, die Lastübertragungsstange mit einem elastischen Diaphragma zu versehen, sodass Gase ins Wägehaus nicht eindringen können. Im NL-C-56 322 ist eine Waage beschrieben, bei welcher das Hebelsystem und das Wiegesystem luftdicht abgeschlossen sind. Die Waagplatte ist an Stangen aufgehängt, die über Gummibälge in das geschlossene Gehäuse eingeführt sind. Der Hauptnachteil aller bisher bekannten Ausführungen ist der grosse mechanische Aufwand, den sie erfordern. Dadurch entstehen sowohl zusätzliche Kosten, als auch eine unerwünschte Bauhöhe, die den Einsatz der Waage je nach Anwendung erschwert oder gar verunmöglicht.

Die der Erfindung zu Grunde liegende Aufgabe besteht darin, eine staub- und spritzwasserdichte Waage zu schaffen, bei welcher die ohnehin vorhandenen Elemente der Waage zusammen mit einfachen mechanischen Mitteln zum Erreichen des gewünschten Zieles kombiniert werden. Dadurch entstehen keine nennenswerten Kosten und die Gesamtkonzeption der Waage, insb. ihre Höhe, bleibt im wesentlichen unverändert.

Dies wird erfindungsgemäss dadurch erreicht, dass der Lastträger das Mess-System, das Gestell und die genannten Mittel vollständig umschliesst und mindestens eine Oeffnung zum Durchlass des Fusses aufweist, welche Oeffnung mittels einer ringförmigen Membrane abgedichtet ist.

Ausführungsbeispiele des Erfindungsgegenstandes sind in der beiliegenden Zeichnung schematisch dargestellt.

Es zeigen :

Figur 1  eine Ansicht von oben mit teilweisem Schnitt nach der Linie I-I in Fig. 2 eines ersten Ausführungsbeispieles,

Figur 2  einen Aufriss mit Schnitt nach der Linie II-II in Fig. 1,

Figur 3  in grösserem Massstab einen Schnitt durch einen Fuss,

Figur 4  in grösserem Massstab eine Platte zur Befestigung der Membrane,

Figuren 5, 6  Variante der Ausführung der Membrane,

Figur 7  eine Variante des ersten Ausführungsbeispieles,

Figur 8  Eine Ansicht von oben mit teilweisem Schnitt nach der Linie VIII-VIII in Fig. 9 eines zweiten Ausführungsbeispieles,

Figur 9  einen Aufriss mit Schnitt nach der Linie IX-IX in Fig. 8,

Figuren 10, 11  eine Riegelverbindung zum Befestigen der oberen Platte des Lastträgers,

Figuren 12, 13  je eine Ausführung zweier Druckausgleichmittel.

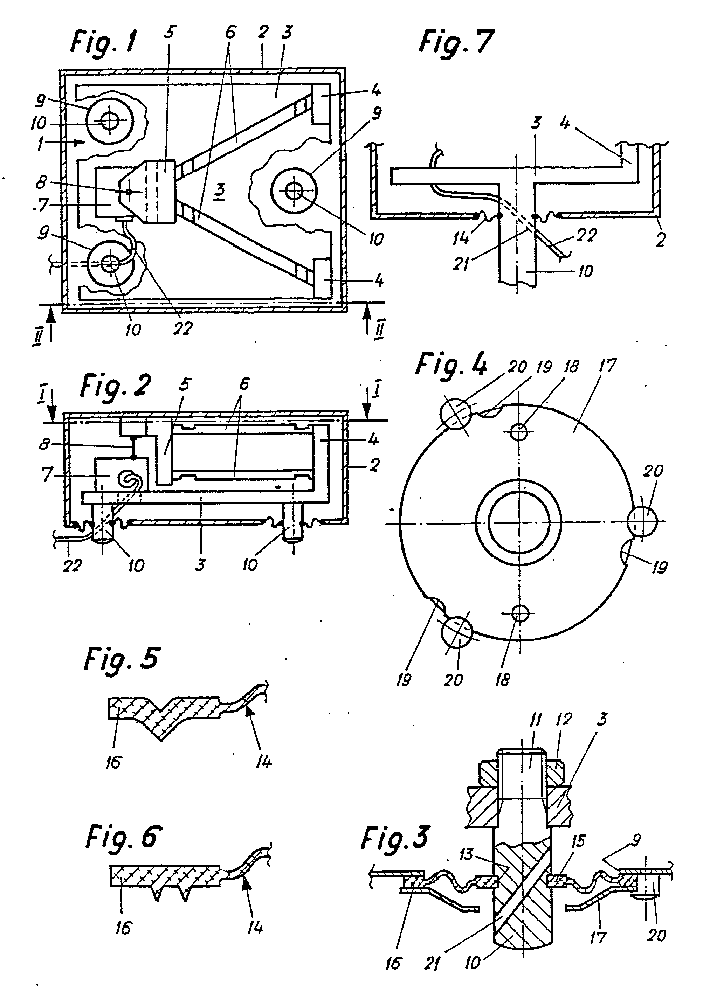

Die in Fig. 1-4 schematisch dargestellte Waage weist ein Gestell 1 und einen Lastträger 2 auf. Das Gestell 1 besteht aus einer starren Platte 3 mit zwei aufrechten Auslegern 4. Der Lastträger 2 weist einen nach unten gerichteten Ausleger 5 auf. Er ist mittels zweier Paare von V-förmig angeordneten elastischen Lenkern 6 senkrecht und parallel geführt. Ferner ist auf der Platte 3 des Gestelles 1 das Mess-System 7 der Waage angeordnet, das über eine Stelze 8 mit dem Lastträger 2 verbunden ist. Beim Wägen von Lasten wird über diese Stelze 8 die auf den Lastträger 2 wirkende Last auf das Mess-System 7 übertragen.

Der Lastträger 2 hat die Form eines geschlossenen Parallelipipeds, er umschliesst vollständig das Gestell 1, die Lenker 6 und das Mess-System 7. Auf seiner Unterseite weist der Lastträger 2 drei Oeffnungen 9 auf, um die drei Füsse 10 des Gestelles 1 durchzulassen. Die Füsse 10 weisen einen oberen Teil 11 mit Gewinde auf und sind mittels einer Mutter 12 an der Platte 3 befestigt (Fig. 3). Ferner weisen sie eine äussere, ringförmige Nut 13 auf, und um die Abdichtung zwischen jedem Fuss 10 und dem Rand seiner Oeffnung 9 zu gewährleisten, ist eine ringförmige Membrane 14 vorgesehen. Ihr innerer Rand ist mit einer Verdickung 15 und ihr äusserer Rand mit einer Verdickung 16 versehen. Die Verdickung 15 liegt unter Zugspannung in der Nut 13 und die Verdickung 16 wird mittels einer ringförmigen Platte 17 gegen die Unterseite des Lastträgers 2 gehalten. Diese Platten 17 weisen zwei kleine Löcher 18 auf, sodass sie mit einem passenden Werkzeug derart verdreht werden können, dass ihre Aussparungen 19 zunächst mit an der Unterseite des Lastträgers angebrachten Haltern 20 radial übereinstimmen und dann versetzt werden, sodass die Verdickung 16 der Membrane 14 zusammen mit dem Rand der Platte 17 von diesen Haltern 20 festgehalten wird.

Einer der drei Füsse 10 weist eine schräge Bohrung 21 auf, durch welche ein Kabel 22 geführt wird, das das Mess-System 7 z. B. mit einem nicht gezeigten Anzeige- oder Datenerfassungsgerät verbindet.

Wird die dargestellte Waage belastet, d. h. wird ein Gegenstand dessen Masse ermittelt werden soll, auf den Lastträger 2 aufgelegt, so überträgt der Lastträger 2 über die Stelze 8 das Gewicht dieses Gegenstandes auf das Mess-System 7, das z. B. in bekannter Weise aus zwei schwingenden Mess-Saiten bestehen kann. Die senkrechte Bewegung des Lastträgers 2 ist sehr klein, sie beträgt z. B. 2 mm bis 0,1 mm, ist sehr klein, sie beträgt z. B. 2 mm bis 0,1 mm, sodass die theoretische Rückstellkraft der Membranen 14, insbesondere bei grosser Höchstlast, ohne weiteres vernachlässigt werden kann.

Der Einfachheit halber ist der Lastträger als beschlossenes Gebilde dargestellt worden. Es ist aber klar, dass in der Praxis mindestens eine seiner Wände erst nach der Montage des Gestelles 1 des Mess-Systems 7 und der Führungsmittel innerhalb des Lastträgers 2 fertig montiert wird.

In Fig. 3 sind beide Verdickungen 15, 16 mit im wesentlichen viereckigem Querschnitt dargestellt. Fig. 5 und 6 zeigen in grösserem Massstab je eine Variante des Querschnittes der äusseren Verdickung 16.

In Fig. 7 ist eine Variante der Ausführung nach Fig. 1, 2 dargestellt, bei welcher das Gestell 1 aus einem Stück mit einem einzigen massiven Fuss 10 besteht. Diese Ausführung ist besonders für solche Anwendungen geeignet, bei welchen die Höchstlast verhältnismässig klein ist, sodass eine eventuelle Beeinflussung des Resultates durch die Rückstellkraft der Membranen 14 nicht immer vernachlässigt werden könnte. Dadurch, dass nur eine Membrane 14 bei dieser Ausführung vorgesehen ist, wird diese mögliche Verfälschung des Resultates weitgehend ausgemerzt.

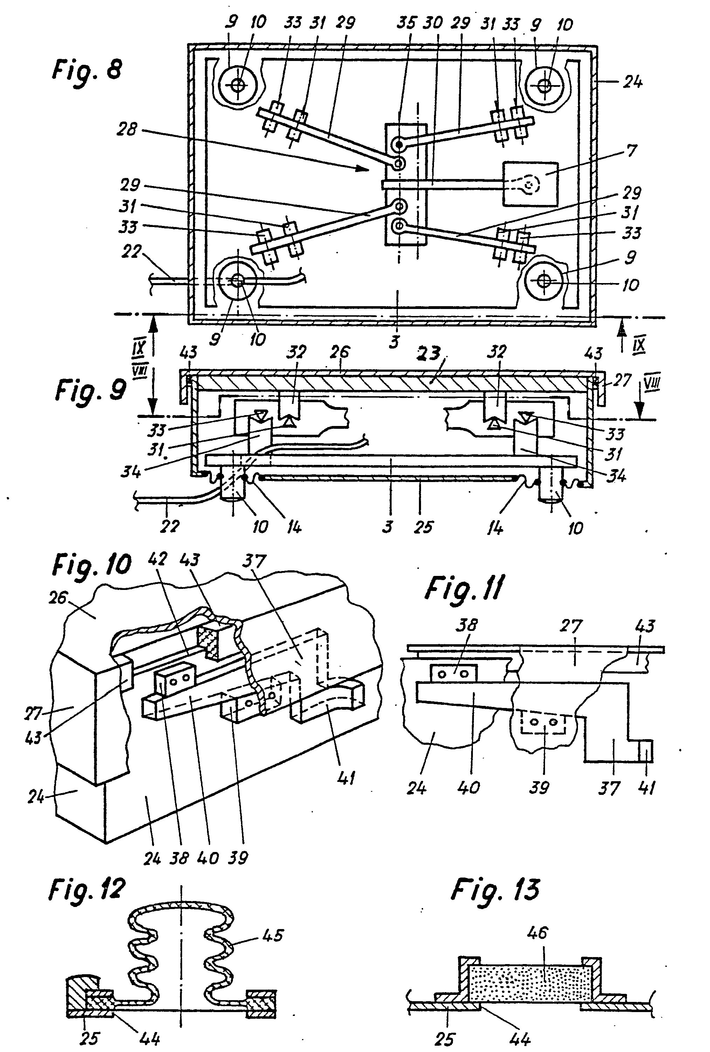

In Fig. 8-11 ist ein zweites Ausführungsbeispiel schematisch dargestellt. Der Lastträger 2 besteht aus einer starren Platte 23, vier Seitenwänden 24, einer Bodenplatte 25 mit vier Oeffnungen 9 für vier Füsse 10 und einer oberen Platte 26 mit Seitenrändern 27. Der Lastträger 2 ist über ein Hebelsystem 28 bekannter Bauart bezüglich des Gestelles 1 geführt. Dieses Hebelsystem 28 besteht aus vier Eckhebeln 29 und einem Sammelhebel 30. Die Eckhebel 29 tragen über Schneiden 31 und Pfannen 32 den Lastträger 2. Sie stützen sich über Schneiden 33 und Pfannen 34 auf das Gestell 1. Die vier Eckhebel 29 wirken auf eine Sammelschneide 35 des Sammelhebels 30, der seinerseits auf das Mess-System 7 einwirkt.

In Fig. 10, 11 ist die Verbindung der oberen Platte 26 mit den Seitenwänden 24 näher dargestellt. Diese Verbindung besteht aus einem Riegel 37 und zwei kleineren Blöcken 38, 39. Der Block 38 mit lotrechter Unterfläche ist an der Seitenwand 24 befestigt. Der Block 39 mit schräger oberer Fläche ist auf der Innenseite an dem Seitenrand 27 befestigt. Der Riegel 37 besteht aus einer flachen, längeren Nase 40 mit schräger Unterseite und einem abgebogenen Finger 41 der von der Unterkante der Seitenränder 27 geführt wird. Wenn dieser Riegel 37 nach links (in Fig. 11) zwischen den beiden Blöcken 38, 39 geschoben wird, so zieht er den aus der oberen Platte 26 und den Seitenrändern 27 bestehenden Teil des Lastträgers 2 nach unten und hält ihn in Kontakt mit den Seitenwänden 24. Um volle Abdichtung zu gewährleisten, ist an der oberen Kante 42 der Seitenwände 24 eine Leiste 43 aus elastischem Abdichtungsmaterial vorgesehen. Es werden normalerweise zwei solche Verbindungen auf zwei parallelen Seitenwänden 24 vorgesehen. Soll die Abdichtung besonders fest sein, so können drei oder vier Verbindungen montiert werden.

Bei Waagen kleinerer höchstlast ist es wünschenswert für einen Druckausgleich zu sorgen. In diesen Fällen wird in der unteren Platte 25 des Lastträgers 2 eine zusätzliche Oeffnung 44 vorgesehen, die z. B. durch einen elastischen Balg 45 (Fig. 12) oder eine ölgetränkte, poröse Wand 46 abgeschlossen ist.

In den dargestellten Ausführungsbeispielen kann das Mess-System mittels des Kabels 22 mit einem nicht dargestellten Anzeigegerät verbunden werden. Dieses Anzeigegerät könnte aber auch innerhalb des Lastträgers angeordnet werden, falls dies für eine gegebene Anwendung notwendig sein sollte.

**Patentansprüche**

1. Staub- und spritzwasserdichte Waage mit einem Mess-System (7), einem Gestell (1, 3, 4) mit mindestens einem Fuss (10), einem Lastträger (2) und Mitteln (4-6, bzw. 28) zur parallelen und senkrechten Führung des Lastträgers, dadurch gekennzeichnet, dass der Lastträger (2) das Mess-System (7), das Gestell (1, 3, 4) und die genannten Mittel (4-6, bzw. 28) vollständig umschliesst und mindestens eine Oeffnung (9) zum Durchlass des Fusses bzw. der Füsse (10) aufweist, welche Oeffnung bzw. Oeffnungen (9) mittels einer ringförmigen Membrane bzw. ringförmiger Membranen (14) abgedichtet ist bzw. sind.

2. Staub- und spritzwasserdichte Waage nach Anspruch 1, dadurch gekennzeichnet, dass die Membrane (14) mittels einer ringförmigen Platte (17) und mittels an der Unterseite des Lastträgers (2) angebrachter Halter (20) befestigt ist.

3. Staub- und spirtzwasserdichte Waage nach Anspruch 1, dadurch gekennzeichnet, dass der Fuss (10) eine bezüglich seiner Achse schräge Bohrung (21) zur Führung eines Kabels (22) aufweist.

4. Staub- und spirtzwasserdichte Waage nach Anspruch 1, dadurch gekennzeichnet, dass der Lastträger (2) eine abnehmbare obere Platte (26) mit Seitenrändern (27) aufweist, die mittels Riegelverbindungen (37-41) an den Seitenwänden (24) des Lastträgers (2) befestigt ist.

5. Staub- und spirtzwasserdichte Waage nach Anspruch 1, dadurch gekennzeichnet, dass Mittel (45 bzw. 46) zum Ausgleich von Druckunterschieden bei belasteter Waage innerhalb des Lastträgers (2) vorgesehen sind.

**Claims**

1. Dust and spray proof scale having a measuring system (7), a frame (1, 3, 4) with at least one foot (10), a load support (2) and means (4-6 or 28) for parallel and vertical guiding of the load support, characterized in that the load support (2) encloses completely the measuring system (7), the frame (1, 3, 4) and said means (4-6 or 28) and has at least one opening (9) through which said foot (feet) (10) extends said opening(s) (9) being sealed by means of an annular diaphragm(s) (14).

2. Dust and spray proof scale according to claim 1, characterized in that the annular diaphragm (14) is secured by means of an annular plate (17) and of a bracket (20) fixed on the bottom of the load support (2).

3. Dust an spray proof scale according to claim 1, characterized by an oblique groove (21) through said foot (10) for a cable (22) connected to said measuring system (7).

4. Dust an spray proof scale according the claim 1, characterized in that the load support (2) has a detachable top plate (26) with side rims (27) mounted on side walls (24), a locking device (37-41) locking said top plate (26) to said side walls (24).

5. Dust and spray proof scale according to claim 1, characterized by means (45 or 46) for pressure compensation between inside and outside of said load support (2) when the scale is loaded.

**Revendications**

1. Balance étanche à la poussière et aux éclaboussures d'eau, comprenant un système de mesure (7), un bâti (1, 3, 4) avec au moins un pied (10), un support de charge (2) et des moyens (4-6 ou 28) pour guider le support de charge verticalement et parallèlement à lui-même, caractérisée en ce que le support de charge (2) enveloppe complètement le système de mesure (7), le bâti (1, 3, 4) et les dits moyens (4-6 ou 28) et présente au moins une ouverture (9) laissant passer le pied, cette ouverture (9) étant rendue étanche par une membrane annulaire (14).

2. Balance étanche à la poussière et aux éclaboussures d'eau selon la revendication 1, caractérisée en ce que la membrane annulaire (14) est fixée au moyen d'une plaque annulaire (17) et d'un tenon (20) fixé sous le support de charge (2).

3. Balance étanche à la poussière et aux éclaboussures d'eau selon la revendication 1, caractérisée par un conduit oblique (21) au travers du pied (10) par lequel passe un câble (22) connecté au système de mesure (7).

4. Balance étanche à la poussière et aux éclaboussures d'eau selon la revendication 1, caractérisée en ce que le support de charge (2) présente une plaque supérieure amovible (26) avec des bords latéraux (27) montée sur les parois latérales (24), un dispositif de blocage (37-41) la fixant à ces parois (24).

5. Balance étanche à la poussière et aux éclaboussures d'eau selon la revendication 1, caractérisée en ce que des moyens (45 ou 46) de compensation de pression permettent de compenser les différences de pression entre l'intérieur et l'extérieur du support de charge (2) lorsque la balance est chargée.

Fig. 1

Fig. 7

Fig. 2

Fig. 4

Fig. 5

Fig. 6

Fig. 3

Fig. 8

Fig. 9

Fig. 10

Fig. 11

Fig. 12

Fig. 13